# EUROPEAN PATENT APPLICATION

(11) **EP 4 383 663 A1**
(43) Date of publication of application: **12.06.2024**
(21) Application number: 23215444.3
(22) Date of filing: 11.12.2023
(51) Int. Cl.: H04L 41/0663, H04L 45/28, H04L 45/24

(54) **APPLICATION-LAYER LOAD BALANCING AND HIGH AVAILABILITY VIA LACP BONDING IN A NETWORK**

(30) Priority: 09.12.2022 CA 3184961
(71) Applicant: 12952386 CANADA INC., Ottawa, ON K2G 6B1 (CA)
(72) Inventor: Cudbard-Bell, Arran, Nepean, K2G 6B1 (CA); DeKok, Alan, Stittsville, K2S 1G9 (CA)
(74) Representative: Serjeants LLP

(57) **Abstract**

There is provided a network for application-layer load balancing and high availability via LACP bonding. In one aspect, a computer network comprises one or more computing component systems and one or more switches, connected to the one or more computing component systems. The connection of each of the one or more computing component systems to the one or more switches is via a LACP connection, wherein the LACP connection informs the one or more switches whether the computing component system is live. The one or more switches receives network traffic and determines which of the one or more computing component systems to send the network traffic to, based on which of the one or more systems is live.

## Description

### TECHNICAL FIELD

In general, this disclosure relates to computer networking and more particularly, to load balancing on an application level and provision of high availability in a computer network using LACP bonding.

### BACKGROUND

It is desirable for computer applications to be highly available and to perform load balancing with fail-over provisions.

High Availability (HA) can be described as a condition of nonstop operation in a computer system or IT component, i.e. a computing component system, for a predetermined length of time. Similarly, high availability can also refer to a level of operational performance that can be guaranteed for a certain amount of time. For example, HA can refer to a site being available for as long as possible, which requires sufficient infrastructure to ensure there is no single point of failure that could take the site down.

Networks are typically built using application-layer high availability via a technology such as Virtual Router Redundancy Protocol (VRRP) or Common Address Redundancy Protocol (CARP). VRRP is a computer networking protocol which automatically assigns available Internet Protocol (IP) routers to participating hosts. CARP is a computer networking protocol which permits a set of IP addresses to be shared by many hosts on the same local area network. Alternatively, networks can be built using network-based high availability by using a load balancer to divide the network traffic between "back-end" application systems.

Using failover and load balancing are two manners in which to achieve High Availability.

Load balancing is the process of using multiple servers to handle network traffic by distributing the network traffic across the servers, thereby spreading the network demand across the servers and improving responsiveness. Through the use of load balancers, the availability of applications and services for users increases since using multiple servers ensures that there is more system capacity to accept the network demand.

In normal situations, a load balancing system will use three or more systems to accept the offered load, but if one or more systems fail, the load balancing system may have only one or two systems running. This process allows some load to be accepted, even if all but one of the systems have failed.

Applications use load balancers to provide high availability and allow for multiple computer systems or computing components systems to provide service, such as a web server, DNS server, or other network service. If one or more of the multiple systems fail, the other components can take over in order to prevent service interruption. The system as a whole will continue to offer service, albeit at a reduced capacity.

Failover protects services from downtime through the use of redundant equipment that can take over if one part fails. The concept of failover in a computer network relates to automatically switching to a redundant computer server, system, hardware component or network upon the failure of a previously active application, server, system, hardware component, or network.

Currently, systems provide either application-layer load-balancing/fail-over high availability, or network-based load-balancing/fail-over high availability. The separation of application information from network information means that neither the application nor the network is capable of making decisions about the system as a whole. Instead, the application makes decisions based on the information it has, independent of what the network does or what information is available to the network. Similarly, the network makes decisions based on the information it has, independent of any information available to the application.

For example, the application may be hosted on a physical (or virtual) machine. The network will normally route traffic to the machine, even if the application is not running on that machine. The result is that when the application is down, traffic may be lost or ignored.

Furthermore, high availability such as with VRRP or CARP is limited to two systems, one of which is active, and one of which is idle. The idle system is used only when the active system fails, which means that the system as a whole will never operate at more than 50% of its maximum capacity.

This limitation can be overcome via the use of a load balancer. In historical uses, a separate load balancer is required to balance traffic across multiple "back-end" systems. The load balancer solves the problem noted above for high availability, in that it allows two (or more) systems to share the load. The system as a whole can therefore operate at full capacity. However, this approach requires the additional network component of the load balancer.

The load balancer is typically a separate device which can balance network traffic across multiple "back-end" systems which provide the services. However, the load balancer itself does not offer these services, and is often unaware of the exact nature of the services being offered.

For example, a load balancer may perform load balancing to a destination port (e.g. 80 for HTTP), but the load balancer only needs to look at the Internet Protocol (IP) packet headers in order to perform its functionality. The load balancer does not necessarily need to examine the HTTP traffic in order to perform this form of load balancing.

One example of a system that provides network-based load-balancing is the Link Aggregation Control Protocol (LACP), which is part of IEEE specification 802.3ad that provides direction on link aggregation for data connections. Link aggregation relates to improving performance by bundling individual links on a network. LACP is normally used to "aggregate" links between networking devices in order to obtain higher total bandwidth and throughput by providing multiple delivery paths and the ability to do load-balancing across all of the available links. Typically, LACP is handled by networking equipment such as switches and routers to provide redundant network activity.

Network bonding refers to the combination of two or more network interfaces into a single-bonded (logical) interface to increase bandwidth and provides redundancy. Link aggregation and LACP bonding allows the aggregation of multiple ports into a single group, thereby combining the bandwidth into a single connection. Essentially, Ethernet interfaces are grouped at the physical layer to form a single link layer interface, also known as a bundle. In typical LACP systems, each application forwards the traffic it receives as a result of the LACP bonding. LACP permits network traffic to be balanced across a number of ports, usually from 1 to 8.

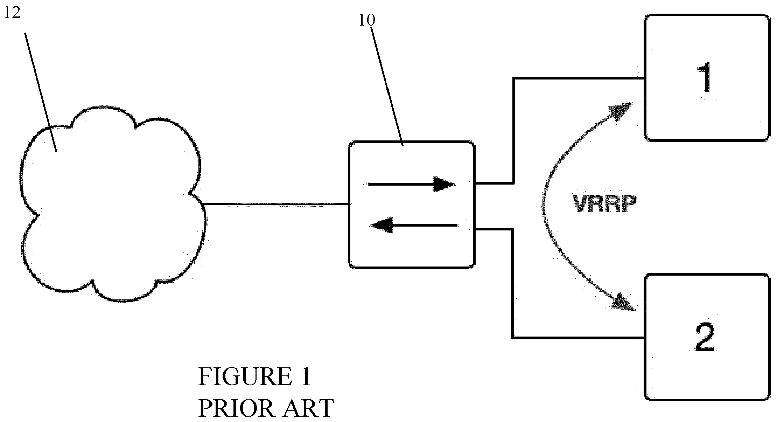

Figure 1 illustrates a typical network configuration for simple HA. Two computing component systems (1) and (2) are connected to a switch 10 (or set of switches). The network traffic comes from the network 12, which could be an internal network or internet (cloud icon). The two nodes use VRRP or similar protocols to communicate with each other, and to inform the switch which system is "live". When the switch receives network traffic, that traffic is sent to either system (1) or (2) Responses from the systems follow the reverse path through the switch.

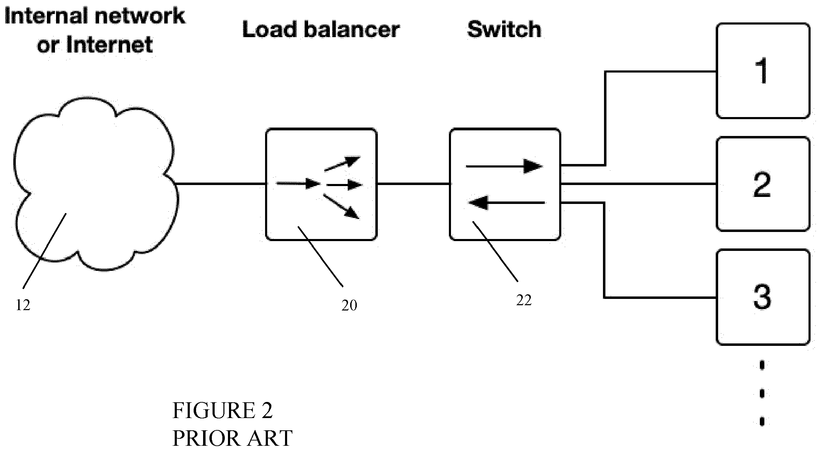

Figure 2 illustrates a typical network configuration for a load balancer. The load balancer (LB) 20 is connect to a switch 22 (or set of switches) which is turn connected to systems (1), (2), (3), etc. The network traffic comes from the network 12 (cloud icon). Unlike the system shown in Figure 1, the systems (1), (2), (3) etc. are not required to communicate with each other, though they may communicate with the load balancer (LB) 20. When the LB 20 receives network traffic, it forwards that traffic through the switch 22 directly to one particular system. Responses from the systems follow the reverse path, though in some configurations these responses may bypass the load balancer 20. The load balancer 20 can monitor responses from the systems in order to passively determine which systems are active. The load balancer 20 may also be informed directly by a system as to the status thereof.

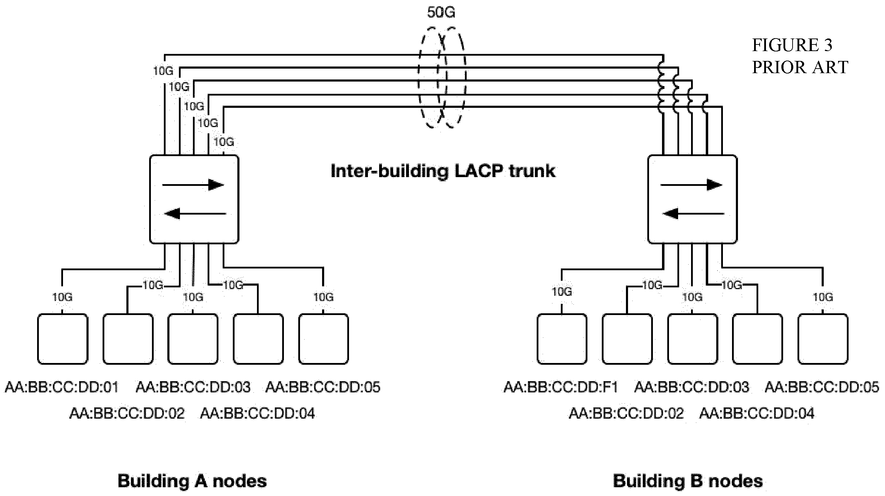

Figure 3 illustrates a typical use of LACP in a network. In this figure it is shown how LACP is used to aggregate connections (50G) between switches or network components. However, the individual machines, such as desktops or servers, are unable to use the benefit of LACP.

### SUMMARY

The present invention sets forth a method and system for providing application-layer load balancing and high availability via LACP bonding in a computer network.

In one aspect, there is provided a computer network, comprising: one or more computing component systems; one or more switches, connected to the one or more computing component systems; wherein the connection of each of the one or more computing component systems to the one or more switches is via a LACP connection; and wherein the LACP connection informs the one or more switches whether the computing component system is live.

In a further example aspect, there is provided a computer network, wherein one or more switches receives network traffic and determines which of the one or more computing component systems to send the network traffic to, based on which of the one or more systems is live.

This present invention resolves some of the deficiencies noted above with prior load balancers and high availability networks. In one aspect, there is provided a system with two or more nodes that is capable of operating at full capacity, with all nodes being "live" and answering requests. In this embodiment, a load balancer is not required. The system thus has a lower cost than either HA or load balancing alone.

In one example aspect of the present invention, by allowing the application to inform the network of its status, the network can immediately stop routing traffic to the system when the application fails, even if the underlying machine is still operational.

### BRIEF DESCRIPTION OF THE DRAWINGS

The invention will be further understood from the following description with reference to the attached drawings.
Figure 1 illustrates a typical network configuration for simple HA scenario.
Figure 2 illustrates a typical network configuration for a load balancer.
Figure 3 illustrates a typical use of LACP in a network.
Figure 4 illustrates one example embodiment of a network of the present invention.

### DETAILED DESCRIPTION

Several embodiments of the present disclosure are described and illustrated below for example purposes only. It will be apparent to those of ordinary skill in the art that the embodiments discussed below are exemplary in nature and may be reconfigured without departing from the scope and spirit of the present disclosure. However, for clarity and precision, the exemplary embodiments as discussed below may include optional steps, methods, and features that one of ordinary skill should recognize as not being a requisite to fall within the scope of the present disclosure.

In one aspect of the present invention, a computer network uses LACP bonding via application systems, wherein the application accepts and processes the traffic itself rather than forwarding the traffic along as per a traditional LACP system. LACP is typically used to increase bandwidth and provide load balancing. In the present system, conversely, LACP bonding at the application layer provides inherent fail-over, high availability and load-balancing.

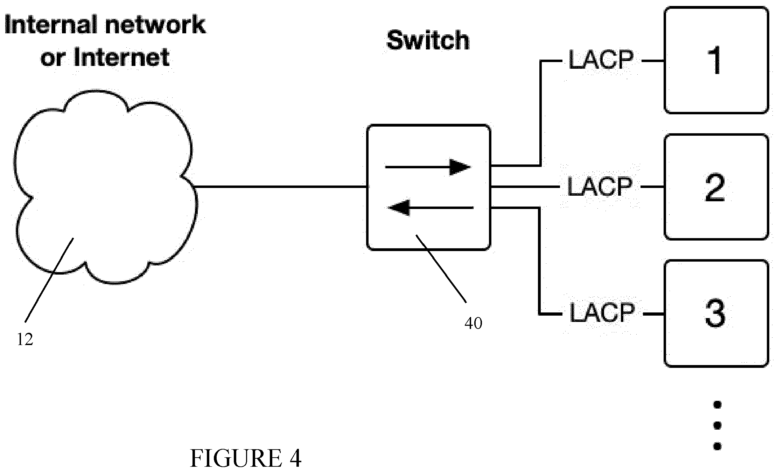

Figure 4 illustrates one example embodiment of a network of the present invention. One or more systems (1), (2), (3), etc are connected to a switch 40 or set of switches. The network traffic comes from the network 12 (cloud icon). The systems (1), (2), (3), etc use LACP to inform the switch 40 which system is "live". When the switch 40 receives network traffic, it chooses one of the plurality of systems which is "live", and sends the traffic there.

Use of LACP bonding in the manner set forth in the present invention permits applications to take advantage of more than two systems for high availability, and removes the need for a separate load balancer. In this manner, the network switches take over the role of load balancing. Furthermore, the limitation of application-layer HA to only one active system is removed, as two or more systems can be active simultaneously. In addition, the limitation of application-layer HA to two systems (such as with VRRP or CARP) is removed, as it is now possible to use more than two systems to handle loads. Furthermore, the limitation of network-layer HA is removed since the load balancer is no longer required.

It will be appreciated by one skilled in the art that variants can exist in the above-described arrangements and applications. For example, there other networking protocols similar to LACP, such as Port Aggregation Protocol (PAgP), Multi-Chassis Link Aggregation (MLAG), or switch stacking. These other protocols have properties and benefits that are similar to LACP and thus, LACP could be replaced by one of the other networking protocols within the system described herein.

Following from the above description, it should be apparent to those of ordinary skill in the art that, while the methods and apparatuses herein described constitute exemplary embodiments of the present invention, the invention described herein is not limited to any precise embodiment and that changes may be made to such embodiments without departing from the scope of the invention as defined by the claims. Consequently, the scope of the claims should not be limited by the preferred embodiments set forth in the examples but should be given the broadest interpretation consistent with the description as a whole. Likewise, it is to be understood that it is not necessary to meet any or all of the identified advantages or objects of the invention disclosed herein in order to fall within the scope of any claims, since the invention is defined by the claims and since inherent and/or unforeseen advantages of the present invention may exist even though they may not have been explicitly discussed herein.

## Claims

1. A computer network, comprising:
one or more computing component systems;
one or more switches, connected to the one or more computing component systems and configured to receive network traffic from a network;
wherein the connection of each of the one or more computing component systems to the one or more switches is via a networking protocol connection; and
wherein the networking protocol connection informs the one or more switches whether the computing component system is live.

2. The computer network of claim 1 wherein the one or more switches determines which of the one or more computing component systems to send the network traffic to, based on which of the one or more systems is live.

3. The computer network of claim 1 wherein the networking protocol is selected from the group consisting of LACP, Port Aggregation Protocol (PAgP), Multi-Chassis Link Aggregation (MLAG), and switch stacking.
